# EUROPÄISCHE PATENTSCHRIFT

(11) **EP 1 851 746 B1**
(45) Veröffentlichungstag und Bekanntmachung des Hinweises auf die Patenterteilung: **11.08.2010**
(21) Anmeldenummer: 06708269.3
(22) Anmeldetag: 14.02.2006
(51) Int. Cl.: G09F 13/24, G09F 9/37, G09F 13/04, G09F 13/22

(54) **DISPLAY ZUR ERSTELLUNG VON DURCH AUFFALLENDES LICHT ERKENNBAREN FARBIGEN BILDERN UND TEXTEN**
DISPLAY FOR CREATING COLOURED IMAGES AND TEXT THAT IS VISIBLE IN INCIDENT LIGHT
AFFICHAGE POUR PRODUIRE DES IMAGES ET DES TEXTES EN COULEURS, RECONNAISSABLES SOUS LUMIERE INCIDENTE

(30) Priorität: 16.02.2005 DE 102005007191; 26.02.2005 DE 102005008834
(43) Veröffentlichungstag der Anmeldung: 07.11.2007
(73) Patentinhaber: ASPRE AG, 9050 Appenzell (CH)
(72) Erfinder: SACHER, Friedrich-Josef, 53842 Troisdorf (DE)
(74) Vertreter: Patentanwälte Freischem
(86) Internationale Anmeldenummer: PCT/EP2006/050933
(87) Internationale Veröffentlichungsnummer: WO 2006/087329

(56) Entgegenhaltungen:
- EP-A- 0 580 891
- WO-A-00/00947
- US-A- 6 037 955
- US-A1- 2004 222 435
- US-B1- 6 771 237

## Beschreibung

### Technisches Umfeld

Die Erfindung bezieht sich auf ein Display zur Erstellung von durch auffallendes Licht erkennbaren farbigen Bildern und Texten, bei dem die Bildfläche sich zusammensetzt aus zahlreichen elektronisch ansteuerbaren, rasterartig angeordneten Pixeln und bei dem jeder Pixel mindestens drei nebeneinander oder hintereinander angeordnete Farbspiegel für die Farben Rot, Grün, Blau oder Cyan, Magenta, Yellow aufweist, die von flachen, durchsichtigen Behältern gebildet sind und deren Innenräume mit Farbreservoirs in Verbindung stehen, deren Inhalt durch elektronische Ansteuerung so bewegt werden kann, daß aus den Farbreservoirs transparente Farbflüssigkeit in die Farbspiegel oder aus den Farbspiegeln in die Farbreservoirs gelangt.

Displays dieser Art sind bekannt aus US 6,037,955, US 6,747,777 und EP 1 090 384. Bei diesen von außen durch Sonnenlicht, Tageslicht oder Lampen beleuchteten Displays besteht - je nach Standort und Tageszeit - auch der Wunsch, das von den Pixeln gebildete Bild auch von hinten zu beleuchten. In EP 1 090 384 wurde deshalb bereits vorgeschlagen, hinter den aus transparentem Werkstoff bestehenden Farbspiegeln und vor den Farbreservoirs eine oder mehrere Lichtquellen anzuordnen, damit das von den Pixeln gebildete Bild auch bei Dunkelheit sichtbar ist.

### Offenbarung der Erfindung

Der Erfindung liegt die Aufgabe zugrunde, ein Farbdisplay zu schaffen, bei dem die Möglichkeit besteht, bei auffallendem Licht, insbesondereTageslicht Teile des von den gesteuerten Pixeln gebildeten Bildes optisch hervorzuheben und/oder farblich zu verändern.

Diese Aufgabe wird erfindungsgemäß dadurch gelöst, daß hinter den Farbspiegeln der Pixel jeweils einem Pixel zugeordnete Lichtquellen angeordnet sind, die einzeln elektronisch ansteuerbar sind.

Mit Hilfe dieser Lichtquellen können Teile des vom Tageslicht beleuchteten Bildes optisch hervorgehoben werden oder in ihren Farben verändert werden. Die Farbmischung kann - wie beim Farbfernsehen - durch additive Mischung der drei Grundfarben Rot, Grün, Blau erfolgen oder - wie in der Farbfotografie - durch subtraktive Mischung der Farben Gelb, Mangan, Cyan.

Die den Pixeln zugeordneten Lichtquellen können insbesondere weiß strahlende Leuchtdioden sein.

Die Lichtquellen können sich aber auch zusammensetzen aus flächigen Beleuchtungskörpern, welche eine größere Anzahl von Pixeln hinterleuchten, und aus zwischen den Beleuchtungskörpern und den Farbspiegeln der Pixel angeordneten Blenden, die je Pixel so steuerbar sind, daß der Lichtdurchgang durch die Blende je Pixel offen oder mehr oder weniger geschlossen ist.

Zur Hinterleuchtung eines größeren Pixelfeldes sind insbesondere die bei Flachbildschirmen bekannten Beleuchtungsvorrichtungen geeignet, die sich zusammensetzen aus einer rechteckigen oder quadratischen, das Pixelfeld überdeckenden, lichtleitenden Leuchtfläche und an den Seitenkanten der Leuchtfläche angeordneten, lichtemittierenden Dioden (LEDs) oder Kathodenstrahlröhren.

Die Blenden können von Polarisationsfiltern gebildet werden, deren Lichtdurchgang je Pixel mittels elektronischer Felder steuerbar ist. Zwei Polarisationsfilter können so angeordnet und gesteuert werden, daß sie den Durchgang sämtlicher Schwingungsebenen des Lichtes sperren. Die Polarisatonsfilter sind folienartig und können unmittelbar auf die Leuchtfläche aufgelegt werden.

Damit die Farbspiegel bei auffallendem Tageslicht ein möglichst brillantes Bild ergeben, ist hinter der Ebene der Farbspiegel eine weiße oder silbrige aber nicht spiegelnde Reflexionsschicht angeordnet, die teilweise oder zeitweise lichtdurchlässig ist. Die Reflexionsschicht kann von einer milchig-trüben Glasfläche oder Kunststoff-Folie gebildet sein oder von einer Glasscheibe oder Kunststoff-Folie, die mit einer matten, weißen oder silbrigen Struktur versehen ist.

Zur Verbesserung der Reflexion bei Auflicht und zur Verbesserung der Lichtdurchlässigkeit bei Hinterleuchtung wird eine Reflexionsschicht vorgeschlagen, die blättchenförmige, weiße oder silbrige Pigmente enthält und die Pigmente mittels eines elektrischen oder magnetischen Feldes parallel zur Schichtebene oder senkrecht dazu ausrichtbar sind. Die in einer Flüssigkeit gleichmäßig verteilten schwimmenden, blättchenförmigen Pigmente bilden eine gute Reflexionsschicht, wenn sie parallel zur Schichtebene ausgerichtet sind, und diese Schicht ist weitgehend lichtdurchlässig, wenn sich die Blättchenstruktur der Pigmente rechtwinklig zur Reflexionsebene erstreckt.

Die Reflexionsschicht kann aber auch aus mindestens einem aus durchsichtigen Material bestehenden flachen Behälter gebildet sein, der mit einer weißen oder silbrigen Farbe befüllt wird - wenn diese Schicht Licht reflektieren soll und mit einer klar durchsichtigen Flüssigkeit befüllt wird, wenn sie lichtdurchlässig sein soll.

Die mit weißer oder silbriger Farbflüssigkeit oder mit farbloser Flüssigkeit befüllten flachen Behälter können hinter einem Pixelfeld angeordnet sein oder aber auch je Pixel als vierter Farbspiegel. In beiden Fällten kann das Display vom Tagbetrieb auf Nachtbetrieb umgeschaltet werden, indem die weiße oder silbrige Reflexionsschicht zu einer die Hinterleuchtung ermöglichenden lichtdurchlässigen Schicht verändert wird.

### Kurze Beschreibung von Zeichnungen

In der folgenden Beschreibung werden Ausführungsbeispiele der Erfindung unter Bezugnahme auf die Zeichnungen näher beschrieben.

Die Fig. 1 zeigt eine Schnittansicht eines Teils des Displays nach der Erfindung.

Die Fig. 2 zeigt eine Draufsicht auf acht Pixel des Displays nach Fig. 1.

Die Fig. 3 zeigt eine Schnittansicht eines Pixelfeldes mit flächiger Hinterleuchtung.

Jedes Pixel 1 des Displays weist drei Farbspiegelschichten 2,2',2" mit einem oberen Farbspiegel 3, einem mittleren Farbspiegel 3' und einem hinteren Farbspiegel 3" auf. Die Farbspiegel 3,3',3" sind flache Behälter aus durchsichtigem Material, die über Kanäle 8,8',8" und 9,9',9" mit Farbreservoirs verbunden sind. Transparente Farbflüssigkeiten der Farben CYAN, MAGENTA und YELLOW (CMY) oder ROT, GRÜN, BLAU (RGB) können aus den Farbreservoirs in die Farbspiegel 3,3',3" und wieder zurück in die Farbreservoirs bewegt werden. Die Farbflüssigkeit kann gegen ein Luf tpolster vor- und zurück bewegt werden oder auch zusammen mit einer nicht mischbaren farblosen Flüssigkeit im Kreislauf oder auch hin- und herbewegt werden. Falls die Farbspiegel 3,3',3" die Kanäle 8,8',8" und 9,9',9" sowie die dazugehörigen Farbreservoirs teils mit einer Farbflüssigkeit und teils mit einer nicht mit der Farbflüssigkeit mischbaren farblosen Flüssigkeit gefüllt sind und der Transport der Farbflüssigkeit und der farblosen Flüssigkeit in bekannter Weise mittels Elektrowetting (US 6,037,955) oder mittels einer anderen Mikropumpe erfolgt, können die Farbflüssigkeiten über die Kanäle 8,8,',8" den Farbspiegeln 3,3',3" zugeführt und gleichzeitig die farblose Flüssigkeit aus den Farbspiegeln 3,3',3" über die Kanäle 9,9',9" oder umgekehrt abgeführt werden. Hinter den Farbspiegeln 3,3',3" eines jeden Pixels 1 ist eine Lichtquelle 6, insbesondere ein weiß strahlendes LED, angeordnet. Diese Lichtquelle 6 kann unabhängig von den anderen Lichtquellen 6 an- und ausgeschaltet und gegebenenfalls in der Lichtstärke gesteuert werden. Diese Lichtquellen 6 sind auf einer Trägerplatte 7 befestigt.

Hinter den Farbspiegeln 3,3',3" und vor den Lichtquellen 6 befindet sich eine lichtdurchlässige weiße oder silbrige Reflexionsschicht 5, die von einer Kunststoff-Folie oder einer dünnen Glasscheibe gebildet sein kann und deren Lichtdurchlässigkeit mindestens 40% beträgt.

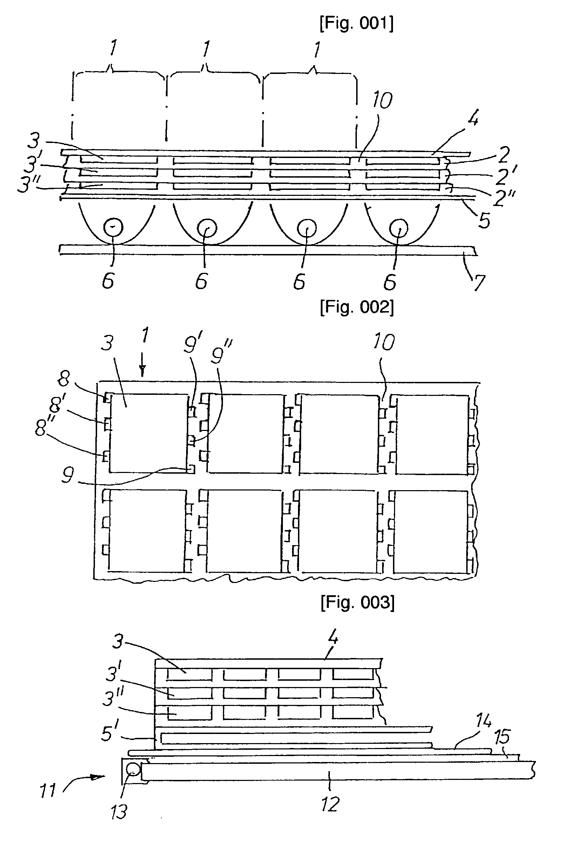

Die Reflexionsschicht kann gemäß Fig. 3 auch von einem flachen Behälter 5' gebildet werden, in dem in einer Flüssigkeit blättchenförmige silbrige Pigmente schwimmen, die parallel zur Schicht oder senkrecht dazu ausgerichtet werden können.

Dieser ein Pixelfeld abdeckende flache Behälter 5' kann aber auch an einem System angeschlossen sein, das mit zwei nicht miteinander mischbaren Fluiden gefüllt ist. Ein Fluid ist eine weiße oder silbrige Farbflüssigkeit, und das andere Fluid ist eine farblose Flüssigkeit oder ein farbloses Gas. Mittels Elektrowetting oder einer Mikropumpe können die Fluide so bewegt werden, daß der durchsichtige flache Behälter nur mit weißer oder silbriger Farbe gefüllt ist oder nur mit dem farblosen, klar durchsichtigen Fluid, je nachdem, ob diese Schicht das auffallende Licht reflektieren soll oder das hinterleuchtende Licht durchlassen soll.

Die nicht dargestellten Farbreservoirs sind hinter der Reflexionsschicht angeordnet, so daß die Farbflüssigkeiten aus dem Sichtbereich der das Display Betrachtenden herausbewegt werden kann.

In Fig. 3 bestehen die den Pixeln zugeordneten Lichtquellen aus einer flächigen Beleuchtungsvorrichtung, die sich zusammensetzt aus einer lichtleitenden Leuchtfläche 12, an deren Seitenkanten Kathodenstrahlröhren 13 oder Leuchtdioden angeordnet sind, und zwei als Blenden dienende Polarisationsfilter 14,15.

Die Größe der Pixel 1 ist abhängig von der Größe des Displays und der Entfernung des Betrachters von diesem Display und liegt im Bereich von 0,5 mm² bis 16 mm², das entspricht bei einem quadratischen Pixel mit einer Pixelbreite von 0,7 bis 4 mm.

Die von den hinter der Reflexionsschicht befindlichen Farbreservoirs zu den Farbspiegeln 3,3',3" führenden Kanäle 8,9; 8',9' und 8",9" sind in den Stegen 10 eingearbeitet, welche die Pixel 1 bzw. deren Farbspiegel 3,3' 3" voneinander trennen und die mit ihrer Oberfläche an der Unterfläche der Deckschicht 4 sowie der vorderen und der mittleren Farbspiegelschicht 2 und 2' anliegen mit diesen dicht verschweißt oder verklebt sind.

Bezugszeichenliste:
- 1: Pixel
- 2: erste Farbspiegelschicht
- 2': zweite Farbspiegelschicht
- 2": dritte Farbspiegelschicht
- 3: vorderer Farbspiegel
- 3': mittlerer Farbspiegel
- 3": hinterer Farbspiegel
- 4: Deckschicht
- 5: Reflexionsschicht
- 6: Lichtquelle LED
- 7: Tragerplatte
- 8: Kanal
- 8': Kanal
- 8": Kanal
- 9: Kanal
- 9': Kanal

- 9": Kanal
- 10: Steg
- 11: flächige Beleuchtungsvorrichtung
- 12: Leuchtfläche
- 13: Kathodenstrahlröhre
- 14: erstes Polarisationsfilter
- 15: zweites Polarisationsfilter

## Patentansprüche

1. Display zur Erstellung von durch von außen auffallendes Licht erkennbaren farbigen Bildern und Texten, bei dem die Bildfläche sich zusammensetzt aus zahlreichen elektronisch ansteuerbaren, rasterartig angeordneten Pixeln (1) und bei dem jeder Pixel (1) mindestens drei nebeneinander oder hintereinander angeordnete Farbspiegel (3,3',3") für die Farben Rot, Grün, Blau oder Cyan, Magenta, Yellow aufweist, die von flachen, durchsichtigen Behältern gebildet sind, deren Innenräume über Kanäle (8,9) mit Farbreservoirs in Verbindung stehen, deren Inhalt durch elektronische Ansteuerung so bewegt werden kann, daß aus den Farbreservoirs transparente Farbflüssigkeit in die Farbspiegel oder aus den Farbspiegeln in die Farbreservoirs gelangt, **dadurch gekennzeichnet, daß** hinter den Farbspiegeln (3) der Pixel (1) jeweils einem Pixel (1) zugeordnete Lichtquellen (6) angeordnet sind, die einzeln elektronisch ansteuerbar sind.

2. Display nach Anspruch 1, **dadurch gekennzeichnet, daß** die ansteuerbaren Lichtquellen (6) insbesondere weiß strahlende Leuchtdioden (LED) sind.

3. Display nach Anspruch 1, **dadurch gekennzeichnet, daß** die je Pixel ansteuerbaren Lichtquellen sich zusammensetzen aus mindestens einer eine größere Gruppe von Pixeln (1) hinterleuchtenden, flächigen Leuchtvorrichtung und einer zwischen den Leuchtvorrichtungen und Farbspiegeln der Pixel (1) angeordneten Blende, die je Pixel (1) so ansteuerbar sind, daß der Lichtdurchgang durch die Blenden offen oder mehr oder weniger geschlossen ist.

4. Display nach Anspruch 3, **dadurch gekennzeichnet, daß** die Blenden von Polarisationsfiltern gebildet sind, deren Lichtdurchgang bzw. Filterwirkung je Pixel (1) mittels elektrischer Felder steuerbar ist.

5. Display nach einem der Ansprüche 1 bis 4, **dadurch gekennzeichnet, daß** hinter den Farbspiegeln (3,3',3") eine weiße oder silbrige Reflexionsschicht (5') angeordnet ist, die teilweise oder zeitweise lichtdurchlässig ist.

6. Display nach Anspruch 5, **dadurch gekennzeichnet, daß** die Reflexionsschicht (5) vor einer mit einer lichtdurchlässigen, matten, weißen oder silbrigen Schicht versehenen Kunststoff-Folie oder dünnen Glasscheibe gebildet ist.

7. Display nach einem der Ansprüche 1 bis 4, **dadurch gekennzeichnet, daß** hinter den Farbspiegeln (3,3',3") und vor den Lichtquellen (6) eine Schicht mit silbrigen oder weißen, blättchenförmigen Pigmenten angeordnet ist, die mittels eines elektrischen oder magnetischen Feldes parallel zur Displayebene ausrichtbar sind und dabei eine Reflexionsschicht bilden und senkrecht dazu ausrichtbar sind zur Bildung einer lichtdurchlässigen Schicht.

8. Display nach einem der Ansprüche 1 bis 4, **dadurch gekennzeichnet, daß** zwischen den Lichtquellen (6) und den Farbspiegeln (3,3',3") eine Reflexionsschicht (5') angeordnet ist, die aus einem aus durchsichtigen Material bestehenden flachen Behälter gebildet ist, der mit einer weißen oder silbrigen Farbe befüllbar ist, wenn die Schicht das Licht reflektieren soll und mit einer klar durchsichtigen Flüssigkeit befüllbar ist, wenn die Schicht lichtdurchlässig sein soll.

9. Display nach einem der Ansprüche 1 bis 4, **dadurch gekennzeichnet, daß** hinter den drei Farbspiegeln (3,3',3") und vor der Lichtquelle (6) eines Pixels ein vierter Farbspiegel angeordnet ist, der mit einer deckenden weißen oder silbrigen Farbe befüllbar ist oder mit einem klar durchsichtigen Medium.

## Claims

1. Display for creating colour images and texts recognisable by incident light, in which the image area consists of numerous electronically controllable pixels (1) in a raster-like arrangement and in which each pixel (1) has at least three colour levels (3, 3', 3") arranged beside one another or behind one another for the colours red, green, blue or cyan, magenta, yellow that are formed by flat transparent containers and whose inner chambers are connected via channels (8, 9) to colour reservoirs whose content can be moved by electronic control in such a way that transparent colour fluids is fed from the colour reservoirs into the colour levels or from the colour levels into the colour reservoirs,
**characterized in that**
light sources (6) are arranged behind the colour levels (3) of the pixels (1), each of the light sources (6) being allocated to one pixel (1) and being individually electronically controllable.

2. Display according to claim 1
**characterized in that**
the controllable light sources (6) are in particular white emitting light emitting diodes (LED).

3. Display according to claim 1
**characterized in that**
the light sources controllable for each pixel consist of at least one plane illuminating device back-illuminating a larger group of pixels (1) and a mask arranged between the illuminating devices and the colour levels of the pixels (1), which can be controlled for each pixel (1) in such a way that the light passage through the masks is open or more or less shut.

4. Display according to claim 3
**characterized in that**
the masks are formed by polarisation filters, whose light passage or filter effect can be controlled by means of electric fields for each pixel (1).

5. Display according to one of the claims 1 to 4
**characterized in that**
behind the colour levels (3, 3', 3") a white or silvery reflection layer is arranged that is partly or temporarily light-permeable.

6. Display according to claim 5
**characterized in that**
the reflection layer (5) is formed by plastic foil or thin glass pane provided with a light-permeable, mat white or silvery layer.

7. Display according to one of the claims 1 to 4
**characterized in that**
a layer with silvery or white leaf-shaped pigments is arranged behind the colour levels (3, 3', 3") and in front of the light sources (6), wherein by means of an electrical or magnetic field, the pigments can be aligned parallel to the display plane and thus form a reflection layer or the pigments can be aligned perpendicular to the display plane and thus form a light-permeating layer.

8. Display according to one of the claims 1 to 4
**characterized in that**
between the light sources (6) and the colour levels (3, 3', 3") a reflection layer (5') is arranged, which is formed by a flat container made of transparent material that can be filled with a white or silvery colour when the layer is supposed to reflect the light, and with a clear transparent fluid when the layer is supposed to be light-permeable.

9. Display according to one of the claims 1 to 4
**characterized in that**
behind the three colour levels (3, 3', 3") and in front of the light source (6) of a pixel a
fourth colour level is fixed, which can be filled with an opaque white or silvery colour or with a clear transparent medium.

## Revendications

1. Affichage destiné à produire des images et des textes en couleurs, reconnaissables sous une lumière incidente provenant de l'extérieur, où l'image se compose de multiples pixels (1) disposés en grille et pilotables électroniquement et où pour chaque pixel (1) sont agencés au moins trois miroirs colorés (3, 3', 3") disposés l'un à côté de l'autre ou l'un derrière l'autre pour les couleurs rouge, vert, bleu ou cyan, magenta, jaune, constitués de récipients plats transparents, dont l'intérieur est relié à des réservoirs de colorants par des conduits (8, 9), dont le contenu est manipulable par voie électronique de manière à assurer le transfert de fluides colorés translucides depuis les réservoirs de colorants vers les miroirs colorés ou depuis les miroirs colorés vers les réservoirs de colorants, **caractérisé en ce que** derrière les miroirs colorés (3) des pixels (1) se trouvent des sources lumineuses (6) correspondant à chaque pixel (1) qui sont individuellement pilotables par voie électronique.

2. Affichage selon la revendication 1, **caractérisé en ce que** les sources lumineuses pilotables (6) sont notamment des diodes électroluminescentes (LED) à lueur blanche.

3. Affichage selon la revendication 1, **caractérisé en ce que** les sources lumineuses pilotables pour chaque pixel se composent au minimum d'un dispositif lumineux plat assurant le rétro-éclairage d'un plus grand groupe de pixels (1) et d'un diaphragme disposé entre les dispositifs lumineux et les miroir colorés des pixels (1), le diaphragme étant pilotable pour chaque pixel (1) de telle sorte que le passage de la lumière à travers les diaphragmes est ouvert ou plus ou moins fermé.

4. Affichage selon la revendication 3, **caractérisé en ce que** les diaphragmes se composent de filtres de polarisation dont l'effet filtrant ou l'effet translucide pour chaque pixel (1) est piloté au moyen d'un champ électrique.

5. Affichage selon une des revendications 1 à 4, **caractérisé en ce que** une couche réflectrice (5') blanche ou argentée, partiellement ou temporairement translucide, est disposée derrière les miroirs colorés (3, 3', 3").

6. Affichage selon la revendication 5, **caractérisé en ce que** la couche réflectrice (5) est formée d'une feuille de plastique ou d'une mince feuille de verre revêtue d'une couche blanche ou argentée, mate, translucide.

7. Affichage selon une des revendications 1 à 4, **caractérisé en ce que** se trouve intercalée derrière les miroirs colorés (3, 3', 3") et devant les sources lumineuses (6) une couche à pigments argentés ou blancs en forme de petites feuilles, orientables sur un plan parallèle au plan d'affichage sous l'effet d'un champ électrique ou magnétique et formant ainsi une couche réfléchissante et orientables perpendiculairement à ce plan pour former une couche translucide.

8. Affichage selon une des revendications 1 à 4, **caractérisé en ce que** se trouve intercalée entre les sources lumineuses (6) et les miroirs colorés (3, 3', 3") une couche réfléchissante (5') constituée d'un récipient plat fabriqué en un matériau transparent, pouvant être rempli d'un colorant blanc ou argenté si la couche est censée réfléchir la lumière et rempli d'un fluide clair translucide si la couche est censée laisser passer la lumière.

9. Affichage selon une des revendications 1 à 4, **caractérisé en ce que** un quatrième niveau de couleur, pouvant être rempli d'une couleur blanche ou argentée opacifiante ou d'un milieu clair translucide, est disposé derrière les trois miroirs colorés (3, 3', 3") et devant la source lumineuse (6) d'un pixel.
